# EUROPEAN PATENT SPECIFICATION

(11) **EP 3 667 451 B1**
(45) Date of publication and mention of the grant of the patent: **03.04.2024**
(21) Application number: 19215025.8
(22) Date of filing: 10.12.2019
(51) Int. Cl.: G05D 1/02, B60W 30/09, B60W 30/095, G08G 1/16

(54) **METHOD AND SYSTEM FOR CONTROLLING A PLURALITY OF AUTONOMOUS VEHICLES**
VERFAHREN UND SYSTEM ZUR STEUERUNG EINER VIELZAHL VON AUTONOMEN FAHRZEUGEN
PROCÉDÉ ET SYSTÈME DE COMMANDE D'UNE PLURALITÉ DE VÉHICULES AUTONOMES

(30) Priority: 11.12.2018 ES 201831201
(43) Date of publication of application: 17.06.2020
(73) Proprietor: Seat, S.A., 08760 Martorell (ES)
(72) Inventor: SEGURA SANTILLANA, Angel, 08760 Martorell (ES); HERRERA GENÉ, Joaquín, 08760 Martorell (ES); FERNÁNDEZ GONZÁLEZ, José Luis, 08760 Martorell (ES)
(74) Representative: Elzaburu S.L.P.

(56) References cited:
- US-A1- 2013 060 401
- US-A1- 2017 162 050
- FELIPE JIMÉNEZ ET AL: "Autonomous Manoeuvring Systems for Collision Avoidance on Single Carriageway Roads", SENSORS, vol. 12, no. 12, 29 November 2012 (2012-11-29), pages 16498-16521, XP055665197, DOI: 10.3390/s121216498

## Description

### Technical field

The present invention relates in general, in a first aspect, to a method for control controlling a plurality of autonomous vehicles.

A second aspect of the invention relates to a system for controlling a plurality of autonomous vehicles.

A third aspect of the invention relates to an autonomous vehicle comprising such system for controlling a plurality of autonomous vehicles.

### State of the art

An autonomous vehicle is a vehicle incorporating an apparatus or system which allows driving automatically from an origin to a predefined destination without depending on the control or action of a driver. The autonomous vehicle is capable of recognising external conditions of the vehicle, as well as the state of the vehicle.

The autonomous vehicle automatically generates a driving path for the vehicle based on the detected external conditions of the vehicle and the state of the vehicle, and controls the vehicle according to the generated driving path.

If an obstacle is detected during the recognition of the external conditions, the autonomous vehicle must be capable of generating a path which enables the obstacle to be avoided or bypassed.

In the state of the art, systems which enable alternative paths to be generated so that the autonomous vehicle can avoid detected external obstacles are known.

For example, document US2017/0166204 proposes a method for controlling a path of an autonomous vehicle including: determining whether or not an obstacle and an autonomous vehicle will collide when a sensor detects an obstacle in the proximity of the vehicle while the vehicle is being autonomously driven; generating a plurality of candidate paths within a path generation region when it is determined that the detected obstacle and the vehicle will collide; determining whether or not an expansion of the path generation region is possible, expanding the path generation region when possible, and regenerating the plurality of candidate paths within the expanded path generation region when there is no candidate path in which the collision between the obstacle and the vehicle does not occur; and selecting a path from among the candidate paths in which the collision between the obstacle and the vehicle does not occur.

The generation of candidate paths enables an obstacle on the road to be avoided based on the autonomous vehicle and the detected obstacle but without taking into account how said candidate paths may affect other autonomous vehicles travelling in a nearby surroundings.

It therefore seems necessary to offer an alternative to the state of the art which provides a method for calculating an avoidance path which takes into account the entire surroundings in which an autonomous vehicle is travelling, with the collision of different autonomous vehicles being avoided if an obstacle is detected, and which does not suffer from the drawbacks known in the state of the art. US2017/162050 discloses a system and a method for collision avoidance for vehicle, wherein the system predicts multiple routes of an abnormal vehicle in a period of time according to historical data when a nearby vehicle receives an alert from the abnormal vehicle. A route potential pattern can be created when the system gets the historical data. The system also computes one or more available routes for the nearby vehicle based on its vehicle information. Every available route has its collision risk value. The system finally provides a recommended route with lower collision risk value when it considers a time of the abnormal vehicle reaches its great change, a time of predicting the nearby vehicle meets the range of route potential pattern, and a safe distance there-between.
The article "Autonomous Manoeuvring Systems for Collision Avoidance on Single Carriageways Roads" discloses a forward collision warning system based on a laser scanner that is able to detect several potential danger situations. Decision algorithms try to determine the most convenient manoeuvre when evaluating the obstacles positions and speeds, road geometry, etc. once detected, the presented system can act on the actuators of the ego-vehicle as well as transmit this information to other vehicles circulating in the same area using vehicle-to-vehicle communications. The system has been tested for overtaking manoeuvres under different scenarios and the correct actions have been performed.
US2013/060401 discloses an apparatus for preventing a collision, including a detection device configured to detect the surroundings of the vehicle and form measurement data, a transmitting/receiving device to transmit and receive the measurement data from other vehicles, and an evaluation device to evaluate the measurement data with a view to an impending collision. A control device has an interface by which the control device controls the vehicle, via which other vehicles in the neighborhood of the vehicle can be controlled, and via which the control device can be controlled by a control device of a vehicle in the neighborhood of the vehicle in such a manner that the impending collision is prevented or a degree of severity of the impending collision is reduced.

### Description of the invention

The present invention has been envisaged to solve the aforementioned drawbacks detected in the state of the art while maintaining intact the advantages achieved the state of the art.

One aspect of the present invention relates to a method for avoiding a collision of an autonomous vehicle when an anomaly or an obstacle is detected in the immediate surroundings of an autonomous vehicle. To that end, all the autonomous vehicles which are in an area near the detected anomaly or obstacle will be identified in order to coordinate the paths of each of them, which enables the detected anomaly or obstacle to be bypassed or evaded.

Thus, a plurality of alternative paths will be generated for each of the autonomous vehicles that will enable the detected anomaly or obstacle to be bypassed or evaded, and the alternative path which avoids an impact with the detected anomaly or obstacle and which avoids an impact between the autonomous vehicles themselves will be chosen for each of the autonomous vehicles. Advantageously, the path of each of the autonomous vehicles of the nearby surroundings will be chosen in a centralised manner from a single vehicle, preventing each of the vehicles from independently choosing the alternative path thereof. The autonomous vehicle which centralises the choice of the path of each of the autonomous vehicles of the nearby surroundings shall meet a series of requirements set forth below.

For that purpose, a first aspect of the present invention relates to a method for controlling a plurality of autonomous vehicles, according to claim 1.

Thus, the process of the present invention is initiated when an autonomous vehicle, or initiating vehicle, detects an anomaly causing an alteration or modification of the reference path of said autonomous vehicle.

In this document, the indication of anomalous situation is equivalent to indicating that the initiating vehicle detects an unexpected or uncontrolled situation, wherein the anomaly is a malfunction or an error in the initiating vehicle itself, an obstacle on the road, travelling conditions or state of the road caused by unforeseen weather events, etc.; in any event, it refers to any cause which makes it necessary to involuntarily modify the pre-established or reference path of the initiating vehicle. In greater detail, in the event of foreseeing that the determined situation generates a change in the reference path greater than a pre-established value, the detected situation is determined to be an anomalous situation. Pre-established value relates to a turn with respect to the reference path greater than a predetermined value, a deceleration greater than a predetermined value and/or a lateral movement in meters with respect to the reference path greater than a predetermined value, among other parameters.

In this document, the indication of reference path of an autonomous vehicle means the path planned or established according to certain conditions. A change in said conditions or the emergence of the mentioned anomaly trigger an alteration in the reference path of the initiating vehicle.

The risk area enables those involved vehicles to be determined, i.e., those autonomous vehicles that are in the immediate vicinity of the anomalous situation and is affected by said detected anomaly or by the change of the reference path of the initiating vehicle.

In this document, the indication risk coefficient of an autonomous vehicle, both of the initiating vehicle and of any detected involved vehicle, relates to an indicator of a possible potential harm or damage for the autonomous vehicles in the surroundings and for the occupants of the autonomous vehicle itself.

The risk coefficient enables the involved vehicle to be determined, whether it is the main vehicle or any of the determined involved vehicles, having a higher risk of causing or generating a potential danger. Advantageously, the vehicle with a higher risk coefficient will centralise the selection of avoidance surfaces for each of the involved vehicles in the defined risk area, preventing redundancies and inefficiencies caused by the fact that each involved vehicle selects its own path.

Each autonomous vehicle detected within the risk area will generate a multitude of avoidance surfaces, avoidance surface being understood to mean a space in the road expected to be occupied by an autonomous vehicle upon modifying its respective reference path. The cause of modifying the reference path is both the direct involvement or interference between the determined anomalous situation and the reference path of the autonomous vehicle, and an interference between an avoidance surface of another involved vehicle and the reference path itself. The avoidance surface is a space or surface, i.e., it is not an exact cloud or path of points, but rather an approximation of the space a vehicle is expected to occupy upon following an alternative path. It is a surface or area represented or included in a 2D map or a 3D environment of the autonomous vehicle. This point enables computational costs for obtaining the modifications of respective reference paths to be reduced, and it facilitates and increases the transmission speed to the main vehicle of said paths, so that the main vehicle centralises the selection of the optimal avoidance surface in each case.

The step of determining an anomalous situation comprises anticipating an impact between the anomalous situation and the initiating vehicle. It alternatively comprises detecting a malfunction of the initiating vehicle which generates a change in the reference path of the initiating vehicle. It alternatively comprises determining an involuntary alteration in the reference path of the initiating vehicle. In any event, a change must exist or be determined that is greater than a predefined value in the reference path of the initiating vehicle so that the situation is determined as anomalous.

It is specified that if the initiating vehicle does not generate a change in the reference path thereof or if the change in reference path is less than a predefined value, the method of the present invention will end as there is no possibility of other autonomous vehicles being affected.

The step of the present method of defining the risk area is additionally based on the plurality of candidate avoidance surfaces of the initiating vehicle, wherein the risk area comprises the determined anomalous situation and the plurality of candidate avoidance surfaces of the initiating vehicle. This thereby enables not only those involved vehicles affected by the anomalous situation to be determined, but also those vehicles which is affected by an avoidance surface of the main vehicle.

In greater detail, the risk coefficient is based on a kinetic energy of the involved vehicle and on a number of people inside the involved vehicle. Furthermore, the risk coefficient is based on a type of the autonomous vehicle, classifying the autonomous vehicle as an automobile, an autonomous vehicle for transporting people, an autonomous vehicle for transporting goods, among others. Furthermore, the risk coefficient is based on a surroundings of the involved vehicle, such that if an element of the nearby surroundings of the autonomous vehicle is considered a risk area, such as, for example, a petrol station, a flammable material tank, the involved vehicle will have a higher risk coefficient. Furthermore, the risk coefficient is based on merchandise transported by the involved vehicle, wherein if the merchandise is hazardous, the involved vehicle will have a higher risk coefficient.

The calculation of the risk coefficient is performed periodically by each autonomous vehicle, that is, the initiating vehicle, the second vehicle and the involved vehicle. Therefore, when the anomalous situation exists, the autonomous vehicle has already calculated the risk coefficient and transmits it to the rest of the involved vehicles.

Alternatively, the calculation of the risk coefficient is performed by each autonomous vehicle at the time of the detection of the anomalous situation, in response to a message requesting the risk coefficient. This message is sent by the initiating vehicle or by another involved vehicle, preferably emitted by the initiating vehicle.

According to one embodiment, the step of generating a plurality of candidate avoidance surfaces of the at least one involved vehicle is performed by means of a control unit of the at least one involved vehicle, wherein the method comprises a step of transmitting the generated plurality of candidate avoidance surfaces from the at least one involved vehicle to the main vehicle by means of a telecommunications network. Each involved vehicle thereby calculates the avoidance surfaces based on the travelling parameters and on the state of the vehicle detected by the at least one sensor of the involved vehicle itself, obtaining high precision in the calculation of the plurality of avoidance surfaces. They will subsequently be transmitted to the main vehicle as a response to a message requesting candidate avoidance surfaces.

According to another embodiment, the method comprises an additional step of transmitting a reference path of the at least one involved vehicle and at least one parameter from the at least one involved vehicle, such as vehicle mass, travelling speed, vehicle handling parameters, etc., to the main vehicle by means of a telecommunications network. Thus, the step of generating a plurality of candidate avoidance surfaces of the at least one involved vehicle is performed by means of a control unit of the main vehicle based on the received reference path of the at least one involved vehicle and on the at least one received parameter of the at least one involved vehicle. The calculation of the avoidance surfaces is thereby centralised in the main vehicle, reducing the volume of data transmitted between involved vehicles and unifying the criteria for calculating the avoidance surfaces.

The step of generating a plurality of candidate avoidance surfaces of the main vehicle is additionally based on the generated plurality of candidate avoidance surfaces of the at least one involved vehicle, wherein the plurality of candidate avoidance surfaces of the main vehicle and the plurality of candidate avoidance surfaces of the at least one involved vehicle have previously been transmitted by means of a telecommunications network.

The step of generating a plurality of candidate avoidance surfaces of the at least one involved vehicle is additionally based on the generated plurality of candidate avoidance surfaces of the main vehicle and the generated plurality of candidate avoidance surfaces of the at least one involved vehicle, wherein the plurality of candidate avoidance surfaces of the main vehicle and the plurality of candidate avoidance surfaces of the at least one involved vehicle have previously been transmitted by means of a telecommunications network.

The step of generating a plurality of candidate avoidance surfaces is a sequential process which is initiated in the initiating vehicle, such that the candidate avoidance surfaces of the initiating vehicle are generated first and subsequently transmitted to an involved vehicle determined as being closest to the initiating vehicle. Said involved vehicle determined as being closest is the next vehicle to determine the avoidance surfaces thereof taking into account the avoidance surfaces of the initiating vehicle that are generated and subsequently transmitted to an involved vehicle determined as being closest to the main vehicle. This sequence is repeated until the last determined involved vehicle. The order of selecting the involved vehicle is based on the distance with respect to the initiating vehicle.

Likewise, the step of selecting a candidate avoidance surface of an involved vehicle is based on the generated plurality of candidate avoidance surfaces of the main vehicle and on the generated plurality of candidate avoidance surfaces of the at least one involved vehicle. It is also a sequential process initiated in this case in the main vehicle. Thus, the avoidance surface of the main vehicle is selected from among the candidate avoidance surfaces according to the criteria explained below. This selected avoidance surface will be taken into account for selecting the avoidance surface of the following involved vehicle, preferably the involved vehicle closest to the main vehicle. This sequence is repeated until the last determined involved vehicle. The order of selecting the involved vehicle is based on the distance with respect to the main vehicle.

According to one embodiment, the step of generating a plurality of candidate avoidance surfaces of the main vehicle comprises generating at least one candidate avoidance surface without a collision of the main vehicle and generating at least one candidate avoidance surface with a collision of the main vehicle.

In this document, the indication candidate avoidance surface without a collision means that a collision between the anomalous situation and the main vehicle does not occur, and/or such that a collision between the main vehicle and the at least one involved vehicle does not occur, and/or such that a collision between the main vehicle and a determined element in the surroundings does not occur.

In this document, the at least one candidate avoidance surface with a collision of the main vehicle is generated such that it minimises the consequences of a collision between the anomalous situation and the main vehicle, and/or is generated such that it minimises the consequences of a collision between the main vehicle and the at least one involved vehicle, and/or is generated such that it minimises the consequences of a collision between the main vehicle and a determined element in the surroundings.

Furthermore, the step of generating a plurality of candidate avoidance surfaces of the at least one involved vehicle comprises generating at least one candidate avoidance surface without a collision of the at least one involved vehicle and generating at least one candidate avoidance surface with a collision of the at least one involved vehicle.

In this document, the indication candidate avoidance surface without a collision means that a collision between the at least one involved vehicle and the main vehicle does not occur, and/or such that a collision between two of the involved vehicles does not occur, and/or such that a collision between the at least one involved vehicle and a determined element in the surroundings does not occur.

In this document, the at least one candidate avoidance surface with a collision of the at least one involved vehicle is generated such that it minimises the consequences of a collision between the at least one involved vehicle and the main vehicle, and/or is generated such that it minimises the consequences of a collision between two of the involved vehicles, and/or is generated such that it minimises the consequences of a collision between the at least one involved vehicle and a determined element in the surroundings.

Thus, an avoidance surface with a collision is calculated according to an anticipated minor impact or serious impact of the autonomous vehicle. Thus, the autonomous vehicle may predict an impact zone, an impact speed and an estimation of the effect or result of the impact, in order to enable the candidate avoidance surface which minimises the consequences of the collision to be selected.

In some embodiments, the step of selecting an avoidance surface of the main vehicle and selecting an avoidance surface of the at least one involved vehicle comprises the steps of:
- generating a plurality of candidate scenarios, wherein each scenario comprises a candidate avoidance surface of the main vehicle and a candidate avoidance surface of the at least one involved vehicle,
- predicting a collision magnitude of each of the plurality of candidate scenarios based on the calculated risk coefficient of the at least one involved vehicle,
- selecting one from among the plurality of candidate scenarios, wherein the selected scenario comprises a lower collision magnitude.

Based on the risk coefficient of each of the involved vehicles, the present invention selects the scenario which globally minimises the effects or consequences. An alternative path is thereby proposed for each of the involved vehicles, such that by taking into consideration all the involved vehicles, it minimises the consequences of a possible impact if said impacts are unable to be avoided.

In some embodiments, the selected scenario comprises selecting a candidate avoidance surface without a collision of the main vehicle. Therefore, if there are a large number of involved vehicles, the calculation of iterations and specific circumstances to be evaluated is reduced. It is furthermore assured that the vehicle with a higher risk coefficient and, therefore with higher consequences in the event of an impact, chooses a candidate avoidance surface without a collision, in the event that a candidate avoidance surface without a collision has been generated.

In some embodiments, the method comprises an additional step of controlling the main vehicle to reproduce the selected avoidance surface by means of at least one actuator of the main vehicle. Likewise, the method comprises an additional step of controlling the at least one involved vehicle to reproduce the received avoidance surface by means of at least one actuator of the involved vehicle. Thus, the autonomous vehicle will comprise means for controlling the at least one actuator and guiding the vehicle through an area demarcated by the selected avoidance surface.

In another aspect, the invention relates to a system for controlling a plurality of autonomous vehicles, according to claim 11.

In another aspect, the invention relates to an autonomous vehicle comprising a system for controlling a plurality of autonomous vehicles as disclosed in the present invention.

### Brief description of the drawings

The foregoing and other advantages and features will be better understand based on the following detailed description of several embodiments in reference to the attached drawings, which must be interpreted in an illustrative and non-limiting manner and in which:
Figure 1 is a schematic diagram illustrating the system for controlling a plurality of autonomous vehicles according to one embodiment.
Figure 2 is a plan view of the detection of an anomalous situation by an initiating vehicle according to one embodiment.
Figure 3 is a plan view of the definition of a risk area of the initiating vehicle according to one embodiment.
Figure 4 is a plan view of the definition of a risk area taking into account a second vehicle according to one embodiment.
Figure 5 is a plan view of the definition of a new risk area taking into account a new involved vehicle according to one embodiment.
Figure 6 is a plan view of the selection of an avoidance surface for each of the involved vehicles according to one embodiment.

### Detailed description of several embodiments

The present invention is based on a methodology for synchronising movements of a plurality of autonomous vehicles 1 when an anomalous or unplanned situation is detected. Autonomous vehicle 1 is understood to be a vehicle capable of imitating the human capabilities of handling and controlling the vehicle itself. To that end, the autonomous vehicle 1 is capable of perceiving the surroundings thereof and travelling in the surroundings without action by the users of the vehicle. According to standard SAE J 3016, the present invention is applicable when the autonomous vehicle 1 travels at automation level 4 or level 5.

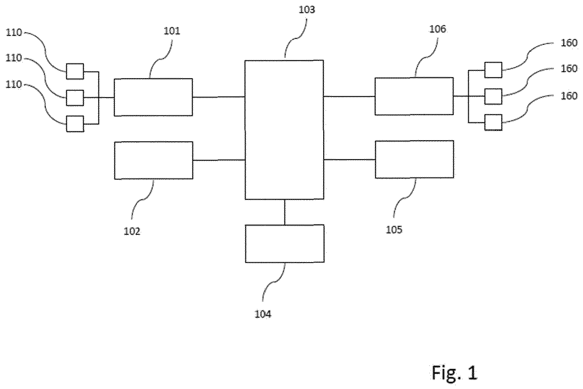

To that end, the autonomous vehicle 1 incorporates a system for controlling a plurality of autonomous vehicles 1 as depicted in the schematic diagram of figure **1****.**

An anomaly detection device 101 will be in charge of analysing both information about the surrounding area of the autonomous vehicle 1 and information about the vehicle itself for the purpose of detecting an anomaly. Anomaly or anomalous situation 2 is understood to be any external or internal cause of the autonomous vehicle 1 producing a modification or alteration in a path followed and planned by the autonomous vehicle. By way of example, an external anomaly outside the vehicle is a stationary object or obstacle detected on the road, a moving object or obstacle detected on the road or expected to come onto the road, or detected adverse weather conditions, among others. By way of example, an internal anomaly inside the vehicle is a failure in the steering system of the autonomous vehicle 1, a flat tire of the autonomous vehicle 1, or an incorrect operation of the braking system of the vehicle itself, among others.

To that end, the anomaly detection device 101 is in communication with a plurality of sensors 110 which analyze and process both external and internal information and parameters of the vehicle. Thus, the anomaly detection device 101 will determine the existence of an anomalous situation 2 to be taken into account for controlling the forward movement of the autonomous vehicle 1. In greater detail, in the event of anticipating that the determined situation generates a change in the reference path 4 greater than a pre-established value, the detected situation is determined to be an anomalous situation 2 by the anomaly detection device 101. By way of example, a pre-established value refers to a turn with respect to the reference path 4 greater than a predetermined value, a deceleration greater than a predetermined value and/or a lateral movement in meters with respect to the reference path 4 greater than a predetermined value, among other parameters.

Additionally, the autonomous vehicle 1 has a risk quantification device 102 to quantify a risk of the autonomous vehicle 1. The risk quantification device 102 evaluates the number of people who are inside the autonomous vehicle 1 and a kinetic energy of the vehicle itself for the purpose of determining the danger that may result from a hypothetical collision of said autonomous vehicle 1, both for the vehicle itself and for the rest of the vehicles in the surroundings. The risk coefficient is furthermore based on weather conditions existing in the surroundings of the autonomous vehicle, the state of the road on which the autonomous vehicle is travelling, the topology of the road on which the autonomous vehicle is travelling, a type of merchandise being transported by the autonomous vehicle, a type of the autonomous vehicle itself, among others. Thus, a risk value of each of the autonomous vehicles 1 in the surroundings will objectively be obtained for the purpose of analysing, after a hypothetical impact, which vehicles may have more serious consequences for the occupants of the autonomous vehicle 1 and/or for the people in the surroundings of the autonomous vehicle 1 and/or for the infrastructure or surroundings of the autonomous vehicle 1.

The risk quantification device 102 calculates the risk value when it receives a message indicating the detection of an anomalous situation 2, both of the autonomous vehicle itself 1 and of another autonomous vehicle 1 in the nearby surroundings. Alternatively, the risk quantification device 102 periodically calculates the risk value or risk coefficient.

Moreover, a path generating device 104 is in charge of generating at least one alternative path with respect to the reference path 4 of the autonomous vehicle 1. Thus, the path generating device 104 is capable of determining different routes for the purpose of avoiding a collision with the anomalous situation 2, in the event that it may occur, and of avoiding a collision with other autonomous vehicles 1 in the surroundings which, as a result of the existence of the anomalous situation 2, must modify the reference path 4 thereof. Preferably, the path generating device 104 calculates at least one avoidance surface 5, i.e., it calculates in an approximate manner on a map of the surroundings which area will be occupied by the autonomous vehicle 1 during the execution of an alternative path. The benefit of calculating a surface instead of a specific path resides in savings in processing for obtaining said alternative path and also in a savings in processing in other autonomous vehicles 1 for determining the zones that will be occupied by each of the autonomous vehicles 1 in the avoidance paths thereof. By way of example, an avoidance surface 5 is the space occupied by the autonomous vehicle 1 resulting from emergency braking in a straight line, or the space occupied by the autonomous vehicle 1 resulting from emergency braking on a curve, or the space occupied by the autonomous vehicle 1 in avoiding or bypassing the anomalous situation 2, or the space occupied by the autonomous vehicle 1 in avoiding or bypassing another autonomous vehicle 1 in the surroundings, or a combination thereof.

According to one embodiment, the path generating device 104 classifies the calculated avoidance surfaces 5 as avoidance surfaces 5 with a collision and avoidance surfaces 5 without a collision. It is understood that other subdivisions is made, such as avoidance surfaces 5 with a minor collision and avoidance surfaces 5 with a serious collision. Thus, by way of example, an avoidance surface 5 comprises the space occupied by the autonomous vehicle 1 during a change in direction of the vehicle to get around an anomalous situation followed by the space occupied by the autonomous vehicle 1 during a emergency braking, further indicating that a possible minor collision with an object in the surroundings detected by any of the sensors 110 of the autonomous vehicle 1 is occurring.

Additionally, the path generating device 104 is configured to select the avoidance surface 5 of the autonomous vehicle itself 1 and selecting the avoidance surface 5 of other autonomous vehicles 1 of the nearby surroundings, such that, in a centralised manner in a single vehicle, the avoidance movements of the autonomous vehicles 1 are coordinated for the purpose of minimising the consequences of a hypothetical impact arising from the emergence of an anomalous situation 2.

A control unit 103 is in communication with the anomaly detection device 101. Thus, the control unit 103 receives the existence of an anomaly from the anomaly detection device 101. Accordingly, the control unit 103 defines a risk area 3 for the purpose of detecting those autonomous vehicles 1 which is affected by the anomalous situation 2, both directly and indirectly due to possible avoidance paths of the autonomous vehicle 1. Said vehicles affected by the risk area are identified in the present invention as involved vehicles 15.

Additionally, the control unit 103 is in communication with the risk quantification device 102. Thus, the control unit 103 receives the risk coefficients calculated by each of the devices of risk quantification 102 of the different affected autonomous vehicles 1, or vehicles determined to be involved vehicles 15. Based on the determined involved vehicles 15 and the risk coefficients of each of said involved vehicles 15, the control unit 103 determines which autonomous vehicle 1 centralises the selection of the avoidance surface 5 of each and every one of the involved vehicles 15. Said vehicle which centralises the selection of the avoidance surface 5 is identified in the present invention as the main vehicle 19.

To facilitate understanding of the present invention, a distinction is made between anomaly detection device 101, risk quantification device 102, path generating device 104 and control unit 103, all or part of the functions being able to be centralised in the control unit 103.

The system for controlling a plurality of autonomous vehicles additionally has an electromagnetic wave transceiver 105 in communication with the control unit 103. Said electromagnetic wave transceiver 105 transmits information between the different autonomous vehicles 1 in the surroundings, using either Wi-Fi technology, Bluetooth technology, or another technology. By means of the electromagnetic wave transceiver 105, the autonomous vehicle 1 sends and/or receives the risk coefficient calculated by means of the risk quantification device 102, sends and/or receives the plurality of candidate avoidance surfaces 5 generated by means of the path generating device 104, and sends and/or receives the selected avoidance surface 5 by means of the path generating device 104. The electromagnetic wave transceiver 105 sends or receives information based on whether the autonomous vehicle 1 is acting as an initiating vehicle 11, involved vehicle 15 and/or main vehicle, as described below.

The system for controlling a plurality of autonomous vehicles has a controller 106, wherein the controller 106 is configured to transform an avoidance surface 5 to be followed by the autonomous vehicle 1 into parameters to be implemented by a plurality of actuators 160, such as a drive system, an accelerator, a brake, a steering system, among others. Thus, the autonomous vehicle 1 executes the alternative path for the purpose of avoiding or minimising the effects of the emergence of the anomalous situation 2.

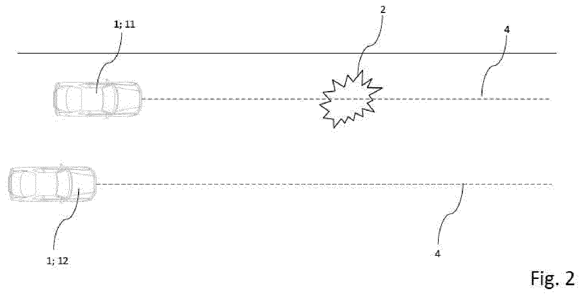

The set of figures 2 to 6 show a non-limiting example in which three autonomous vehicles 1 communicate and are synchronised with one another for the purpose of assigning to each of the autonomous vehicles 1 an avoidance path which enables an impact to be mitigated or, by default, enabling the consequences of an impact to be minimised.

**Figure 2** depicts two autonomous vehicles 1 following a respective reference path 4. Each of the autonomous vehicles 1 has a system for controlling a plurality of autonomous vehicles as described above.

In a determined instant, one of the autonomous vehicles 1 determines an anomalous situation 2 interfering with the reference path 4. The vehicle that determines the anomalous situation 2 is referred to as the initiating vehicle 11. Namely, an anomaly detection device 101 of the initiating vehicle 11 determines, by means of a signal sent from at least one sensor 110, the existence of an anomalous situation 2 making it necessary to modify the reference path 4 in an unplanned manner.

In addition to the initiating vehicle 11, there is a second vehicle 12 travelling in a nearby surroundings with respect to the initiating vehicle 11. Depending on the avoidance maneuver for avoiding the anomalous situation 2 made by the initiating vehicle 11, the second vehicle 12 is affected, such that a collision between the initiating vehicle 11 and the second vehicle 12 may occur.

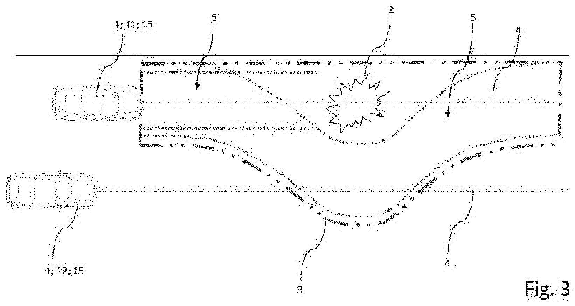

For the purpose of determining the involvement of the second vehicle 12, a risk area 3 is calculated. Thus, as seen in figure **3****,** the risk area 3, represented by a dash-dotted line, is defined. The risk area 3 is defined based on the kinematic energy of the initiating vehicle 11, the turning and braking parameters of the initiating vehicle 11, the state of the road, the characteristics of the detected anomalous situation 2, weather conditions in the surroundings of the initiating vehicle 11, among others. Additionally, the initiating vehicle 11 generates a plurality of candidate avoidance surfaces 5 for the purpose of avoiding the detected anomalous situation 2, by means of the path generating device 104.

In the example of figure 3, the initiating vehicle 11 determines two possible candidate avoidance surfaces 5. Avoidance surface 5 is understood to be an area or surface of the road which the autonomous vehicle 1 occupies for the purpose of avoiding or bypassing an unplanned situation. It is observed that it is an approximate zone or surface, with high tolerances, i.e., having a width greater than that of the respective autonomous vehicle 1, and not an exact path. The computational cost is thus reduced and the process of generating and selecting an avoidance surface 5 is thus accelerated.

According to one embodiment, during the generation of the candidate avoidance surfaces 5, the path generating device 104 classifies the candidate avoidance surfaces 5 as candidate avoidance surfaces 5 without a collision and candidate avoidance surfaces 5 with a collision according to whether or not the involved vehicle 15 is anticipated to impact or collide with the anomalous situation 2, with another involved vehicle 15 or with an object in the surroundings. It is understood that other subdivisions of said groups is made, such as, for example, the candidate avoidance surfaces 5 with a collision is classified according to the degree of impact probability, according to the degree of severity of the anticipated impact, the impact zone of the involved vehicle 15, etc. Likewise, the candidate avoidance surfaces 5 without impact is classified according to the anticipated lateral acceleration value, according to the anticipated forward acceleration value, etc.

Thus, according to the schematic example of figure 3, the path generating device 104 of the initiating vehicle 11 generates a first avoidance surface 5 with a collision with the anomalous situation 2 which consists of a braking in a straight line and a second avoidance surface 5 without a collision which consists of a turn to the right and a turn to the left to resume the reference path 4. Only two avoidance surfaces 5 are proposed for the purpose of simplifying the explanation, with the understanding that there is a multitude of different avoidance surfaces 5. For the generation of the avoidance surfaces 5 by the path generating device 104, additional risks in the surroundings are taken into account, such as buildings, lateral edge of the road, etc., detected by the sensors 110 of the autonomous vehicle 1. In the specific case of figure 3, the initiating vehicle 11 does not generate any avoidance surface 5 to the left side due, for example, to a detected obstacle.

Based on the determined avoidance surfaces 5 and the anomalous situation 2, the initiating vehicle 11 demarcates a risk area 3. Said risk area 3 is represented on a map in order to enable it to be interpreted by the rest of the autonomous vehicles 1 in the surroundings. Thus, the risk area 3 is sent in a message to the rest of the vehicles in a nearby surroundings by means of the electromagnetic wave transceiver 105. The scope of said message is defined based on the dimensions and position of the determined risk area 3, for the purpose of limiting data traffic.

A second vehicle 12 receives the message, interprets the received risk area 3 and compares the risk area 3 with the reference path 4 thereof. In the event of there being a coincidence or interference between the risk area 3 and the reference path 4 thereof in space and time, the second vehicle 12 is determined to be the involved vehicle 15 in the anomalous situation 2. The second vehicle 12 communicates through a message sent by means of a telecommunications network to the initiating vehicle 11 that it is a vehicle affected by the anomalous situation 2. Accordingly, both the initiating vehicle 11 and the second vehicle 12 determine that both autonomous vehicles 1 are involved vehicles 15 in the determined anomalous situation 2.

According to one embodiment, if there is an imminent risk of collision between the initiating vehicle 11 and the anomalous situation 2, the initiating vehicle 11 selects an avoidance surface 5 from among the plurality of avoidance surfaces 5. A controller 106 interprets the selected avoidance surface 5 to emit a set of messages for a plurality of actuators 160 of the initiating vehicle 11 so that the initiating vehicle 11 travels in the area or zone demarcated by the avoidance surface 5, preventing or minimising the consequences of an imminent impact with the detected anomalous situation 2. If there is no imminent collision between the initiating vehicle 11 and the determined anomalous situation 2, all the involved vehicles 15 are then determined for the purpose of coordinating the avoidance paths thereof in a centralised manner.

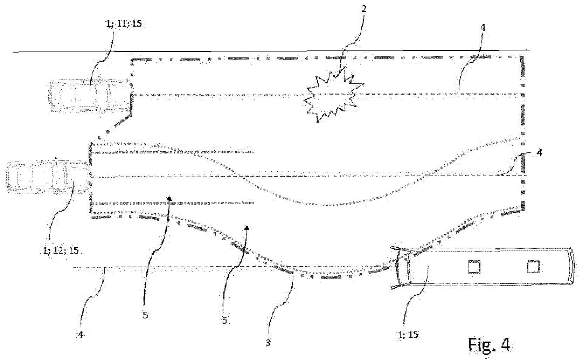

According to one embodiment of the invention, each of the involved vehicles 15 generates a plurality of candidate avoidance surfaces 5. The existence of more involved vehicles 15 is thereby evaluated. Thus, as observed in **figure 4****,** the second vehicle 12 determined to be the involved vehicle 15 generates avoidance surfaces 5 taking into account the determined anomalous situation 2 and the received avoidance surfaces 5 of the initiating vehicle 11. Thus, by way of illustrative example, the second vehicle 12 once again generates two avoidance surfaces 5: a first avoidance surface 5 without a collision which consists of emergency braking in a straight line and a second avoidance surface 5 without a collision which consists of a manoeuvre with a first turn to the right and a second turn to the left to recover the respective reference path 4 thereof.

Subsequently, a new risk area 3 is calculated taking into account the first risk area 3 of the initiating vehicle 11 and adding the avoidance surfaces 5 of the second vehicle 12. Alternatively, an independent risk area 3 for each of the involved vehicles 15 has been into account. In the example of figure 4, a single risk area 3 including the risk area 3 of the initiating vehicle 11 and the risk area 3 of the second vehicle 12 is depicted. Said risk area 3 is depicted on a cartographic map in order to enable it to be interpreted by the rest of the autonomous vehicles 1 in the surroundings. Thus, the risk area 3 is sent in a message to the rest of the vehicles in a nearby surroundings by means of the electromagnetic wave transceiver 105. The scope of said message is defined based on the dimensions and position of the determined risk area 3, for the purpose of limiting data traffic.

A third autonomous vehicle 1 receives the message, interprets the received risk area 3 and compares the risk area 3 with the reference path 4 thereof. If there is a coincidence or interference between the risk area 3 and the reference path 4 thereof in space and time, the third autonomous vehicle 1 is determined to be the involved vehicle 15 in the anomalous situation 2. The third autonomous vehicle 1 communicates through a message sent by means of a telecommunications network to the initiating vehicle 11 and/or to the rest of the involved vehicles 15 that it is a vehicle affected by the anomalous situation 2, therefore it is determined to be a new involved vehicle 15.

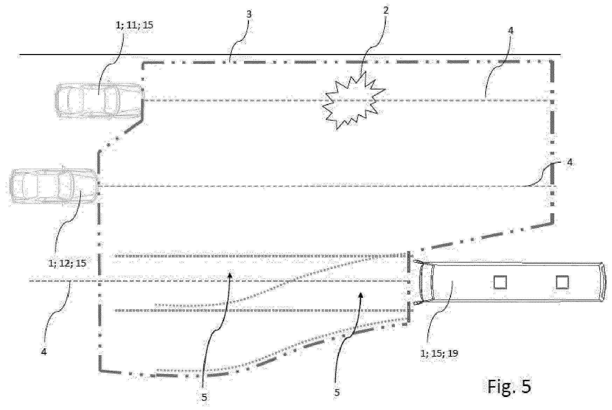

As seen in **figure 5****,** the third autonomous vehicle 1 generates its own candidate avoidance surfaces 5 by taking into account the determined anomalous situation 2 and the received candidate avoidance surfaces 5 and/or the received risk area 3. Thus, by way of illustrative example, the third autonomous vehicle 1 again generates two avoidance surfaces 5: a first avoidance surface 5 without a collision which consists of emergency braking in a straight line and a second avoidance surface 5 without a collision which consists of a manoeuvre with a turn to the left. Subsequently, a new risk area 3 is calculated taking into account the previous risk area 3 and adding the avoidance surfaces 5 of the third autonomous vehicle 1.

This process that has been explained which enables detecting other involved vehicles 15 either directly in the anomalous situation 2 or which is seen as being indirectly involved by avoidance surfaces 5 of the rest of the involved vehicles 15 is repeated for each determined new involved vehicle 15. The process ends when there are no new involved vehicles 15. The intention therefore is to determine all the autonomous vehicles 1 which is affected for the purpose of coordinating the avoidance manoeuvres thereof and being able to minimise the consequences of said unplanned changes in the respective reference paths 4 thereof. For the purpose of facilitating the explanation of the present invention, in the example depicted in the figures there are only three involved vehicles 15.

According to a first embodiment, each autonomous vehicle 1 calculates a risk coefficient when it is determined that said autonomous vehicle 1 is determined to be the involved vehicle 15. The risk coefficient is a parameter indicating the degree of danger of said autonomous vehicle 1. Thus, the risk coefficient is calculated taking into account the mass of the autonomous vehicle 1 itself, its travelling speed, the number of people inside the autonomous vehicle 1, the transport of hazardous goods by said autonomous vehicle 1, etc., all of which is used to assess the danger a hypothetical collision of said autonomous vehicle 1 entails for the occupants of the autonomous vehicle 1, for the occupants of other autonomous vehicles 1 in the surroundings, and for people or objects in the surroundings.

Alternatively, the risk coefficient is periodically determined by each autonomous vehicle 1 without it having to be determined to be the involved vehicle 15.

Each involved vehicle 15 in the risk area 3 will send to the rest of the involved vehicles 15 the calculated risk coefficient by means of a message sent by a telecommunications network. Preferably, the risk coefficient is sent only to the initiating vehicle 11 as a response to a message requesting the risk coefficient sent by the initiating vehicle 11. Thus, the initiating vehicle 11 evaluates which involved vehicle 15 has a higher risk coefficient for the purpose of determining the main vehicle 19. Accordingly, the role of main vehicle 19 is assigned to the involved vehicle 15 with a higher risk coefficient.

As seen in figure 5, the main vehicle 19 is assigned to the third autonomous vehicle 1 because, by way of example, it is a vehicle for transporting people, with more than twenty people therein, with a high weight and lower handling capacities. From among the three autonomous vehicles 1 depicted, it is the autonomous vehicle 1 that entails a higher risk in the event of an impact. Thus, it will be the main vehicle 19 that centralises and coordinates the avoidance manoeuvres of all of the involved vehicles 15 in the risk area 3, optimising processing resources and seeking that at least one avoidance manoeuvre of the main vehicle 19 be performed consistent with the changing and non-stationary surroundings of said autonomous vehicle 1. It is furthermore sought that any error in data transmission or error in the calculation or processing not affect the avoidance manoeuvre of the main vehicle 19.

According to one embodiment, the main vehicle 19 receives the plurality of avoidance surfaces 5 of each of the involved vehicles 15. The avoidance surfaces 5 are calculated when the risk area 3 is defined by each involved vehicle 15. Said calculation is performed based on a message which notifies the involvement of the autonomous vehicle 1 in the risk area 3 by the initiating vehicle 11. Alternatively, the plurality of avoidance surfaces 5 of each of the involved vehicles 15 is calculated as a response to a message requesting the avoidance surfaces 5 sent by the main vehicle 19 by means of the telecommunications network.

Thus, the main vehicle 19 sends a request to the rest of the involved vehicles 15 in order to receive by means of the telecommunications network the plurality of candidate avoidance surfaces 5 of each of the involved vehicles 15. Furthermore, the main vehicle 19 generates a plurality of candidate avoidance surfaces 5 based on the reference path 4 thereof, the determined anomalous situation 2 and the plurality of avoidance surfaces 5 of the rest of the involved vehicles 15.

As observed, the generation of candidate avoidance surfaces 5 is sequenced, i.e., the avoidance surface 5 of an involved vehicle is calculated based on the plurality of candidate avoidance surfaces 5 of the rest of the involved vehicles 15. Thus, the initiating vehicle 11 which detects the anomalous situation 2 generates the candidate avoidance surfaces 5 thereof. These candidate avoidance surfaces 5 are processed and sent to the second vehicle 12 affected by the risk area 3, which generates the candidate avoidance surfaces 5 thereof by taking into account the determined anomalous situation 2 and the received candidate avoidance surfaces 5 of the initiating vehicle 11. Thus, the step of generating a plurality of candidate avoidance surfaces 5 of an autonomous vehicle 1 is sequential according to the order in which an involvement or implication of each involved vehicle 15 has been detected and/or according to a distance or proximity with respect to the already detected involved vehicles 15.

Alternatively, the main vehicle 19 calculates and generates the plurality of candidate avoidance surfaces 5 of each involved vehicle 15 based on the anomalous situation, the received reference path 4 of each involved vehicle 15, the type of autonomous vehicle 1, the kinematic parameters of each autonomous vehicle 1 and the calculated plurality of avoidance surfaces 5 for the rest of the autonomous vehicles 15, among other parameters. Some of said variables or parameters have been received by means of the telecommunications network as a response to a request made by the main vehicle 19.

Once the main vehicle 19 knows the plurality of candidate avoidance surfaces 5 of each of the involved vehicles 15, either because they have been generated by the path generating device 104 of the main vehicle 19 or because they have been generated by the path generating device 104 of the respective involved vehicle 15 and subsequently transmitted to the main vehicle 19, the main vehicle 19 selects an avoidance surface 5 of the main vehicle 19 from among the plurality of candidate avoidance surfaces 5 of the main vehicle 19, and the main vehicle 19 selects a candidate avoidance surface 5 of each involved vehicle 15.

Thus, the main vehicle 19 generates a plurality of candidate scenarios for the purpose of minimising consequences of a hypothetical collision of the involved vehicles 15 in the defined risk area 3. Each scenario comprises a candidate avoidance surface 5 of the main vehicle 19 and a candidate avoidance surface 5 for each involved vehicle 15. To that end, each scenario corresponds to a variant of the possible specific circumstances based on the generated candidate avoidance surfaces 5 for each of the involved vehicles 15. The path generating device 104 predicts a collision magnitude of each of the generated plurality of candidate scenarios taking into account the risk coefficient of each involved vehicle 15 and selects the candidate scenario comprising a lower collision magnitude.

By way of example, the main vehicle 19 selects, if it exists, a candidate avoidance surface 5 without a collision of the main vehicle 19 and selects a candidate avoidance surface 5 without a collision for each of the involved vehicles 15 in the risk area 3. If such scenario does not exist, the main vehicle 19 selects the scenario with a collision comprising a lower risk coefficient. Thus, in the event that an impact of a single involved vehicle 15 occurs, the involved vehicle 15 with a lower risk coefficient is selected. An example of said scenario would be to select a candidate avoidance surface 5 without a collision of the main vehicle 19, a candidate avoidance surface 5 with a collision for the involved vehicle 15 comprising a lower risk coefficient, and a candidate avoidance surface 5 without a collision for the rest of the involved vehicles 15 in the risk area 3. If an impact between two or more involved vehicles 15 occurs, those involved vehicles 15 wherein the sum of the risk coefficients thereof is lower are selected. An example of said scenario would be to select a candidate avoidance surface 5 without a collision of the main vehicle 19, a candidate avoidance surface 5 with a collision between two involved vehicles 15, and a candidate avoidance surface 5 without a collision for the rest of the involved vehicles 15 in the risk area 3. Finally, in the event that the possible single scenario involves a collision of all the involved vehicles 15, the avoidance surface 5 of each involved vehicle 15 which minimises a predicted collision magnitude is selected.

Additionally, in the event that the path generating device 104 classifies the avoidance surfaces 5 with criteria such as the degree of impact probability, according to the degree of severity of the anticipated impact, the impact zone of the involved vehicle 15, etc., said criteria are taken into account for selecting the scenario which minimises a predicted collision magnitude of the involved vehicles 15.

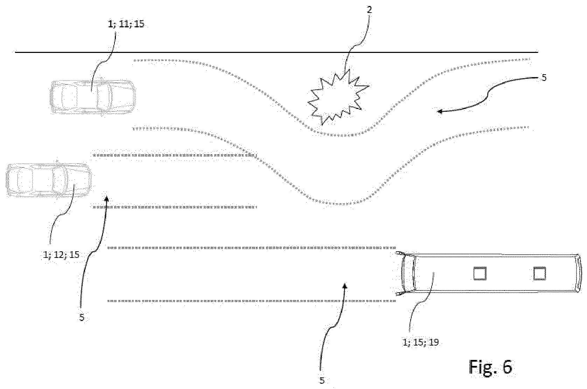

Thus, as observed in **figure 6****,** the path generating device 104 of the main vehicle 19 generates the plurality of candidate scenarios, selecting the scenario which minimises the collision magnitude. The chosen scenario in the case of the example selects the first avoidance surface 5 without a collision of the main vehicle 19 which consists of emergency braking in a straight line, selects the first avoidance surface 5 without a collision of the second vehicle 12 which consists of emergency braking in a straight line, and selects the second avoidance surface 5 without a collision of the initiating vehicle 11 which consists of a turn to the right and a turn to the left to resume the reference path 4. As observed, there is a single avoidance surface 5 with a collision, namely the first avoidance surface 5 with a collision of the initiating vehicle 11 with the anomalous situation 2. Due to the existence of scenarios comprising zero risk of collision, the path generating device 104 rules out the scenarios comprising said avoidance surface 5 with a collision.

Additionally, the main vehicle 19 transmits a message for each of the involved vehicles 15 by means of the electromagnetic wave transceiver 105, wherein said message comprises their respective avoidance surface 5 selected by the main vehicle 19.

Once each involved vehicle 15 receives the avoidance surface 5 by means of the electromagnetic wave transceiver 105, a controller 106 interprets the received avoidance surface 5 and emits a set of messages for a plurality of actuators 160 of the involved vehicle 15 for the involved vehicle 15 to travel in the area or zone demarcated by the avoidance surface 5.

Likewise, the main vehicle 19 comprises a controller 106 which interprets the selected avoidance surface and emits a set of messages for a plurality of actuators 160 of the main vehicle 19 for the main vehicle 19 to travel in the area or zone demarcated by the selected avoidance surface 5.

## Claims

1. A method for controlling a plurality of autonomous vehicles, comprising the steps of:
a) determining an anomalous situation (2) by means of an anomaly detection device (101) of an initiating vehicle (11), wherein the anomalous situation (2) generates a change in a reference path (4) of the initiating vehicle (11),
b) defining a risk area (3) based on the determined anomalous situation (2) by means of a control unit (103) of the initiating vehicle (11), and transmitting the calculated risk area (3) from the initiating vehicle (11) to a rest of the autonomous vehicles (1) in a nearby surroundings,
c) determining, by means of each anomaly detection device (101) of each of the rest of the autonomous vehicles based on the received risk area (3), if the rest of the autonomous vehicles (12) are involved vehicles (15) in the anomalous situation (2),
d) calculating a risk coefficient by means of a risk quantification device (102) of the initiating vehicle (11) and a risk coefficient for each of the at least one involved vehicle (15) by means of each risk quantification device (102) of each involved vehicle (15),
**characterized in that** the method comprises furthermore the steps of:
e) transmitting as a response to a message requesting the risk coefficient sent by the initiating vehicle (11) the calculated risk coefficients from the at least one involved vehicle (15) to the initiating vehicle (11) by means of a telecommunications network,
f) assigning, by the control unit (103) of the initiating vehicle (11) based on the received risk coefficients, a main vehicle (19) which centralises the selection of an avoidance surface (5), wherein the main vehicle (19) is the autonomous vehicle (1) with the higher risk coefficient,
g) generating a plurality of candidate avoidance surfaces (5) by the control unit (103) of the main vehicle (19) based on the determined anomalous situation (2) and the reference path (4) of the main vehicle (19),
h) generating a plurality of candidate avoidance surfaces (5) of the at least one other vehicle (15) based on the determined anomalous situation (2) and a reference path (4) of the at least one other vehicle (15), the at least one other vehicle (15) being the at least one involved vehicle (15) and/or the initiating vehicle (11),
i) selecting an avoidance surface (5) of the main vehicle (19) from among the generated plurality of candidate avoidance surfaces (5) of the main vehicle (19) by means of a control unit (103) of the main vehicle (19), and selecting an avoidance surface (5) of the at least one other vehicle (15) from among the generated plurality of candidate avoidance surfaces (5) of the at least one other vehicle (15) by means of a control unit (103) of the main vehicle (19) based on the calculated risk coefficient of the at least one other vehicle (15), and
j) transmitting, by means of an electromagnetic wave transceiver (105) of the main vehicle (19), to the at least one other vehicle (15) the selected avoidance surface (5) of the at least one other vehicle (15) by means of a telecommunications network.

2. The method according to claim 1, wherein the step of defining the risk area (3) is additionally based on the plurality of candidate avoidance surfaces (5) of the initiating vehicle (11), wherein the risk area (3) comprises the determined anomalous situation (2) and the plurality of candidate avoidance surfaces (5) of the initiating vehicle (11).

3. The method according to claim 1, wherein the step of determining at least one involved vehicle (15) in the anomalous situation (2) comprises determining at least one of the rests of the autonomous vehicles (12) affected by the determined risk area (3) of the initiating vehicle (11) based on a reference path (4) of each of the rest autonomous vehicles (12) and the determined risk area (3).

4. The method according to claim 1, wherein the risk coefficient is based on a kinetic energy of the involved vehicle and on a number of people inside the involved vehicle.

5. The method according to claim 1, wherein the step of generating a plurality of candidate avoidance surfaces (5) of the at least one other vehicle (15) is performed by means of a control unit (103) of the at least one other vehicle (15), wherein the method comprises a step of transmitting the generated plurality of candidate avoidance surfaces (5) from the at least one other vehicle (15) to the main vehicle (19) by means of a telecommunications network.

6. The method according to any of claims 1 to 5, comprising a step of transmitting a reference path (4) of the at least one other vehicle (15) and at least one parameter from the at least one other vehicle (15) to the main vehicle (19) by means of a telecommunications network, wherein the step of generating a plurality of candidate avoidance surfaces (5) of the at least one other vehicle (15) is performed by means of a control unit (103) of the main vehicle (19) based on the received reference path (4) of the at least one other vehicle (15) and on the at least one received parameter of the at least one other vehicle (15).

7. The method according to claim 1, wherein the step of generating a plurality of candidate avoidance surfaces (5) of the main vehicle (19) comprises generating at least one candidate avoidance surface (5) without a collision of the main vehicle (19) and generating at least one candidate avoidance surface (5) with a collision of the main vehicle (19).

8. The method according to claim 1, wherein the step of generating a plurality of candidate avoidance surfaces (5) of the at least one other vehicle (15) comprises generating at least one candidate avoidance surface (5) without a collision of the at least one other vehicle (15) and generating at least one candidate avoidance surface (5) with a collision of the at least one other vehicle (15).

9. The method according to any of claims 7 or 8, wherein the step of selecting an avoidance surface (5) of the main vehicle (19) and selecting an avoidance surface (5) of the at least one other vehicle (15) comprises the steps of:
- generating a plurality of candidate scenarios, wherein each scenario comprises a candidate avoidance surface (5) of the main vehicle (19) and a candidate avoidance surface (5) of the at least one other vehicle (15),
- predicting a collision magnitude of each of the plurality of candidate scenarios based on the calculated risk coefficient of the at least one other vehicle (15),
- selecting one from among the plurality of candidate scenarios, wherein the selected scenario comprises a lower collision magnitude.

10. The method according to claim 9, wherein the selected scenario comprises selecting a candidate avoidance surface (5) without a collision of the main vehicle (19).

11. A system for controlling a plurality of autonomous vehicles, wherein:
a) an anomaly detection device (101) of an initiating vehicle (11) configured to determine an anomalous situation (2) which generates a change in a reference path (4) of the initiating vehicle (11),
b) a control unit (103) of the initiating vehicle (11) configured to define a risk area (3) and transmit transmits the calculated risk area (3) from the initiating vehicle (11) to a rest of the autonomous vehicles (1) in a nearby surroundings,
c) each anomaly detection device (101) of each of the rest of the autonomous vehicles (1), is configured to determine based on the risk area (3) if the rest of the autonomous vehicles (12) are involved vehicles (15) in the anomalous situation (2),
d) a risk quantification device (102) of the initiating vehicle (11) is configured to calculate a risk coefficient and a risk quantification device (102) of each involved vehicle (15) is configured to calculate a risk quantification, **characterized in that**
e) the initiating vehicle (11) is configured to transmit, as a response to a message requesting the risk coefficient sent by the initiating vehicle (11), the calculated risk coefficients from the at least one involved vehicle (15) to the initiating vehicle (11) by means of a telecommunications network,
f) the control unit (103) of the initiating vehicle (11), based on the received risk coefficients, is configured to assign a main vehicle (19) which centralises the selection of an avoidance surface (5), wherein the main vehicle (19) is the autonomous vehicle (1) with the higher risk coefficient,
g) the control unit (103) of the main vehicle (19) is configured to generate a plurality of candidate avoidance surfaces (5) based on the determined anomalous situation (2) and the reference path (4) of the main vehicle (19),
h) the control unit (103) of the main vehicle (19) is configured to generate a plurality of candidate avoidance surfaces (5) of the at least one other vehicle (15) based on the determined anomalous situation (2) and a reference path (4) of the at least one other vehicle (15), the at least one other vehicle (15) being the at least one involved vehicle (15) and/or the initiating vehicle (11),
i) the control unit (103) of the main vehicle (19) is configured to select an avoidance surface (5) of the main vehicle (19) from among the generated plurality of candidate avoidance surfaces (5) of the main vehicle (19), and select an avoidance surface (5) of the at least one other vehicle (15) from among the generated plurality of candidate avoidance surfaces (5) of the at least one other vehicle (15) based on the calculated risk coefficient of the at least one other vehicle (15), and
j) an electromagnetic wave transceiver (105) of the main vehicle (19) is configured to transmit to the at least one other vehicle (15) the selected avoidance surface (5) of the at least one other vehicle (15) by means of a telecommunications network.

12. An autonomous vehicle (1) comprising the system for controlling a plurality of autonomous vehicles according to claim 11.

## Patentansprüche

1. Verfahren zum Steuern einer Vielzahl von autonomen Fahrzeugen, umfassend die folgenden Schritte:
a) Bestimmen einer anomalen Situation (2) mittels einer Anomalieerkennungsvorrichtung (101) eines initiierenden Fahrzeugs (11), wobei die anomale Situation (2) eine Änderung eines Referenzpfads (4) des initiierenden Fahrzeugs (11) erzeugt,
b) Definieren eines Risikobereichs (3) basierend auf der bestimmten anomalen Situation (2) mittels einer Steuereinheit (103) des initiierenden Fahrzeugs (11), und Übertragen des berechneten Risikobereichs (3) von dem initiierenden Fahrzeug (11) zu einem Rest der autonomen Fahrzeuge (1) in einer nahen Umgebung,
c) Bestimmen, mittels jeder Anomalieerkennungsvorrichtung (101) jedes der übrigen autonomen Fahrzeuge basierend auf dem empfangenen Risikobereich (3), ob der Rest der autonomen Fahrzeuge (12) bei der anomalen Situation (2) involvierte Fahrzeuge (15) sind,
d) Berechnen eines Risikokoeffizienten mittels einer Risikoquantifizierungsvorrichtung (102) des initiierenden Fahrzeugs (11) und eines Risikokoeffizienten für jedes des mindestens einen involvierten Fahrzeugs (15) mittels jeder Risikoquantifizierungsvorrichtung (102) von jedem involvierten Fahrzeug (15), **dadurch gekennzeichnet, dass** das Verfahren ferner die folgenden Schritte umfasst:
e) Übertragen, als Reaktion auf eine Nachricht zur Anforderung des Risikokoeffizienten, die von dem initiierenden Fahrzeug (11) gesendet wird, der berechneten Risikokoeffizienten von dem mindestens einen involvierten Fahrzeug (15) an das initiierende Fahrzeug (11) mittels eines Telekommunikationsnetzes,
f) Zuweisen, durch die Steuereinheit (103) des initiierenden Fahrzeugs (11) basierend auf den empfangenen Risikokoeffizienten, eines Hauptfahrzeugs (19), das die Auswahl einer Ausweichfläche (5) zentralisiert, wobei das Hauptfahrzeug (19) das autonome Fahrzeug (1) mit dem höheren Risikokoeffizienten ist,
g) Erzeugen einer Vielzahl von Kandidaten-Ausweichflächen (5) durch die Steuereinheit (103) des Hauptfahrzeugs (19) basierend auf der bestimmten anomalen Situation (2) und dem Referenzpfad (4) des Hauptfahrzeugs (19),
h) Erzeugen einer Vielzahl von Kandidaten-Ausweichflächen (5) des mindestens einen anderen Fahrzeugs (15) basierend auf der bestimmten anomalen Situation (2) und einem Referenzpfad (4) des mindestens einen anderen Fahrzeugs (15), wobei das mindestens eine andere Fahrzeug (15) das mindestens eine involvierte Fahrzeug (15) und/oder das initiierende Fahrzeug (11) ist,
i) Auswählen einer Ausweichfläche (5) des Hauptfahrzeugs (19) aus der erzeugten Vielzahl von Kandidaten-Ausweichflächen (5) des Hauptfahrzeugs (19) mittels einer Steuereinheit (103) des Hauptfahrzeugs (19), und Auswählen einer Ausweichfläche (5) des mindestens einen anderen Fahrzeugs (15) aus der erzeugten Vielzahl von Kandidaten-Ausweichflächen (5) des mindestens einen anderen Fahrzeugs (15) mittels einer Steuereinheit (103) des Hauptfahrzeugs (19) basierend auf dem berechneten Risikokoeffizienten des mindestens einen anderen Fahrzeugs (15), und
j) Übertragen, mittels eines Sendeempfängers elektromagnetischer Wellen (105) des Hauptfahrzeugs (19) an das mindestens eine andere Fahrzeug (15), der ausgewählten Ausweichfläche (5) des mindestens einen anderen Fahrzeugs (15) mittels eines Telekommunikationsnetzes.

2. Verfahren nach Anspruch 1, wobei der Schritt eines Definierens des Risikobereichs (3) zusätzlich auf der Vielzahl von Ausweichflächen (5) des initiierenden Fahrzeugs (11) basiert, wobei der Risikobereich (3) die bestimmte anomale Situation (2) und die Vielzahl von Ausweichflächen (5) des initiierenden Fahrzeugs (11) umfasst.

3. Verfahren nach Anspruch 1, wobei der Schritt eines Bestimmens mindestens eines involvierten Fahrzeugs (15) in der anomalen Situation (2) ein Bestimmen mindestens eines der Reste der autonomen Fahrzeuge (12), die von dem bestimmten Risikobereich (3) des initiierenden Fahrzeugs (11) betroffen sind, basierend auf einem Referenzpfad (4) von jedem der restlichen autonomen Fahrzeuge (12) und des bestimmten Risikobereichs (3) umfasst.

4. Verfahren nach Anspruch 1, wobei der Risikokoeffizient auf einer kinetischen Energie des involvierten Fahrzeugs und auf einer Anzahl an Personen im Inneren des involvierten Fahrzeugs basiert.

5. Verfahren nach Anspruch 1, wobei der Schritt eines Erzeugens einer Vielzahl von Kandidaten-Ausweichflächen (5) des mindestens einen anderen Fahrzeugs (15) mittels einer Steuereinheit (103) des mindestens einen anderen Fahrzeugs (15) durchgeführt wird, wobei das Verfahren einen Schritt eines Übertragens der erzeugten Vielzahl von Kandidaten-Ausweichflächen (5) von dem mindestens einen anderen Fahrzeug (15) zu dem Hauptfahrzeug (19) mittels eines Telekommunikationsnetzes umfasst.

6. Verfahren nach einem der Ansprüche 1 bis 5, umfassend einen Schritt eines Übertragens eines Referenzpfads (4) des mindestens einen anderen Fahrzeugs (15) und mindestens eines Parameters von dem mindestens einen anderen Fahrzeug (15) an das Hauptfahrzeug (19) mittels eines Telekommunikationsnetzes, wobei der Schritt eines Erzeugens einer Vielzahl von Kandidaten-Ausweichflächen (5) des mindestens einen anderen Fahrzeugs (15) mittels einer Steuereinheit (103) des Hauptfahrzeugs (19) basierend auf dem empfangenen Referenzpfad (4) des mindestens einen anderen Fahrzeugs (15) und auf dem mindestens einen empfangenen Parameter des mindestens einen anderen Fahrzeugs (15) durchgeführt wird.

7. Verfahren nach Anspruch 1, wobei der Schritt eines Erzeugens einer Vielzahl von Kandidaten-Ausweichflächen (5) des Hauptfahrzeugs (19) ein Erzeugen mindestens einer Kandidaten-Ausweichfläche (5) ohne eine Kollision des Hauptfahrzeugs (19) und ein Erzeugen mindestens einer Kandidaten-Ausweichfläche (5) mit einer Kollision des Hauptfahrzeugs (19) umfasst.

8. Verfahren nach Anspruch 1, wobei der Schritt eines Erzeugens einer Vielzahl von Kandidaten-Ausweichflächen (5) des mindestens einen anderen Fahrzeugs (15) ein Erzeugen mindestens einer Kandidaten-Ausweichfläche (5) ohne eine Kollision des mindestens einen anderen Fahrzeugs (15) und ein Erzeugen mindestens einer Kandidaten-Ausweichfläche (5) mit einer Kollision des mindestens einen anderen Fahrzeugs (15) umfasst.

9. Verfahren nach einem der Ansprüche 7 oder 8, wobei der Schritt eines Auswählens einer Ausweichfläche (5) des Hauptfahrzeugs (19) und eines Auswählens einer Ausweichfläche (5) des mindestens einen anderen Fahrzeugs (15) die folgenden Schritte umfasst:
- Erzeugen einer Vielzahl von Kandidaten-Szenarien, wobei jedes Szenario eine Kandidaten-Ausweichfläche (5) des Hauptfahrzeugs (19) und eine Kandidaten-Ausweichfläche (5) des mindestens einen anderen Fahrzeugs (15) umfasst,
- Vorhersagen eines Kollisionsausmaßes für jedes der Vielzahl von Kandidaten-Szenarien basierend auf dem berechneten Risikokoeffizienten des mindestens einen anderen Fahrzeugs (15),
- Auswählen eines aus der Vielzahl der möglichen Kandidaten-Szenarien, wobei das ausgewählte Szenario eine geringere Kollisionsgröße umfasst.

10. Verfahren nach Anspruch 9, wobei das ausgewählte Szenario ein Auswählen einer Kandidaten-Ausweichfläche (5) ohne Kollision des Hauptfahrzeugs (19) umfasst.

11. System zum Steuern einer Vielzahl von autonomen Fahrzeugen, wobei:
a) eine Anomalieerkennungsvorrichtung (101) eines initiierenden Fahrzeugs (11) konfiguriert ist, um eine anomale Situation (2) zu bestimmen, die eine Änderung in einem Referenzpfad (4) des initiierenden Fahrzeugs (11) erzeugt,
b) eine Steuereinheit (103) des initiierenden Fahrzeugs (11) konfiguriert ist, um einen Risikobereich (3) zu definieren und den berechneten Risikobereich (3) von dem initiierenden Fahrzeug (11) an einen Rest der autonomen Fahrzeuge (1) in einer nahen Umgebung zu übertragen,
c) jede Anomalieerkennungsvorrichtung (101) von jedem der übrigen autonomen Fahrzeuge (1) konfiguriert ist, um basierend auf dem Risikobereich (3) zu bestimmen, ob der Rest der autonomen Fahrzeuge (12) an der anomalen Situation (2) involvierte Fahrzeuge (15) sind,
d) eine Risikoquantifizierungsvorrichtung (102) des initiierenden Fahrzeugs (11) konfiguriert ist, um einen Risikokoeffizienten zu berechnen, und eine Risikoquantifizierungsvorrichtung (102) von jedem involvierten Fahrzeug (15) konfiguriert ist, um eine Risikoquantifizierung zu berechnen,
**dadurch gekennzeichnet, dass**
e) es konfiguriert ist, um, als Reaktion auf eine Nachricht zur Anforderung des Risikokoeffizienten, die von dem initiierenden Fahrzeug (11) gesendet wird, den berechneten Risikokoeffizienten von dem mindestens einen involvierten Fahrzeug (15) mittels eines Telekommunikationsnetzes an das initiierende Fahrzeug (11) zu übertragen,
f) die Steuereinheit (103) des initiierenden Fahrzeugs (11) basierend auf den empfangenen Risikokoeffizienten konfiguriert ist, um ein Hauptfahrzeug (19) zuzuweisen, das die Auswahl einer Ausweichfläche (5) zentralisiert, wobei das Hauptfahrzeug (19) das autonome Fahrzeug (1) mit dem höheren Risikokoeffizienten ist,
g) die Steuereinheit (103) des Hauptfahrzeugs (19) konfiguriert ist, um basierend auf der bestimmten anomalen Situation (2) und dem Referenzpfad (4) des Hauptfahrzeugs (19) eine Vielzahl von Kandidaten-Ausweichflächen (5) zu erzeugen,
h) die Steuereinheit (103) des Hauptfahrzeugs (19) konfiguriert ist, um eine Vielzahl von Kandidaten-Ausweichflächen (5) des mindestens einen anderen Fahrzeugs (15) basierend auf der bestimmten anomalen Situation (2) und einem Referenzpfad (4) des mindestens einen anderen Fahrzeugs (15) zu erzeugen, wobei das mindestens eine andere Fahrzeug (15) das mindestens eine involvierte Fahrzeug (15) und/oder das initiierende Fahrzeug (11) ist,
i) die Steuereinheit (103) des Hauptfahrzeugs (19) konfiguriert ist, um eine Ausweichfläche (5) des Hauptfahrzeugs (19) aus der erzeugten Vielzahl von Ausweichflächenkandidaten (5) des Hauptfahrzeugs (19) auszuwählen und eine Ausweichfläche (5) des mindestens einen anderen Fahrzeugs (15) aus der erzeugten Vielzahl von Ausweichflächenkandidaten (5) des mindestens einen anderen Fahrzeugs (15) basierend auf dem berechneten Risikokoeffizienten des mindestens einen anderen Fahrzeugs (15) auszuwählen, und
j) ein Sendeempfänger elektromagnetischer Wellen (105) des Hauptfahrzeugs (19) konfiguriert ist, um die ausgewählte Ausweichfläche (5) des mindestens einen anderen Fahrzeugs (15) mittels eines Telekommunikationsnetzes an das mindestens eine andere Fahrzeug (15) zu übertragen.

12. Autonomes Fahrzeug (1), umfassend das System zum Steuern einer Vielzahl autonomer Fahrzeuge nach Anspruch 11.

## Revendications

1. Procédé de commande d'une pluralité de véhicules autonomes, comprenant les étapes de :
a) détermination d'une situation anormale (2) au moyen d'un dispositif de détection d'anomalie (101) d'un véhicule initiateur (11), dans lequel la situation anormale (2) génère un changement d'un trajet de référence (4) du véhicule initiateur (11),
b) définition d'une zone à risque (3) sur la base de la situation anormale (2) déterminée au moyen d'une unité de commande (103) du véhicule initiateur (11), et transmission de la zone à risque (3) calculée du véhicule initiateur (11) à un reste des véhicules autonomes (1) dans un environnement proche,
c) détermination, au moyen de chaque dispositif de détection d'anomalie (101) de chacun du reste des véhicules autonomes sur la base de la zone à risque (3) reçue, si le reste des véhicules autonomes (12) sont des véhicules (15) impliqués dans la situation anormale (2),
d) calcul d'un coefficient de risque au moyen d'un dispositif de quantification de risque (102) du véhicule initiateur (11) et d'un coefficient de risque pour chacun de l'au moins un véhicule (15) impliqué au moyen de chaque dispositif de quantification de risque (102) de chaque véhicule (15) impliqué,
**caractérisé en ce que** le procédé comprend en outre les étapes de :
e) transmission en réponse à un message demandant le coefficient de risque envoyé par le véhicule initiateur (11) des coefficients de risque calculés de l'au moins un véhicule (15) impliqué au véhicule initiateur (11) au moyen d'un réseau de télécommunications,
f) désignation, par l'unité de commande (103) du véhicule initiateur (11) sur la base des coefficients de risque reçus, d'un véhicule principal (19) qui centralise la sélection d'une surface d'évitement (5), dans lequel le véhicule principal (19) est le véhicule autonome (1) avec le coefficient de risque le plus élevé,
g) génération d'une pluralité de surfaces d'évitement candidates (5) par l'unité de commande (103) du véhicule principal (19) sur la base de la situation anormale (2) déterminée et du trajet de référence (4) du véhicule principal (19),
h) génération d'une pluralité de surfaces d'évitement candidates (5) de l'au moins un autre véhicule (15) sur la base de la situation anormale (2) déterminée et d'un trajet de référence (4) de l'au moins un autre véhicule (15), l'au moins un autre véhicule (15) étant l'au moins un véhicule (15) impliqué et/ou le véhicule initiateur (11),
i) sélection d'une surface d'évitement (5) du véhicule principal (19) parmi la pluralité générée de surfaces d'évitement candidates (5) du véhicule principal (19) au moyen d'une unité de commande (103) du véhicule principal (19), et sélection d'une surface d'évitement (5) de l'au moins un autre véhicule (15) parmi la pluralité générée de surfaces d'évitement candidates (5) de l'au moins un autre véhicule (15) au moyen d'une unité de commande (103) du véhicule principal (19) sur la base du coefficient de risque calculé de l'au moins un autre véhicule (15), et
j) transmission, au moyen d'un émetteur-récepteur d'ondes électromagnétiques (105) du véhicule principal (19), à l'au moins un autre véhicule (15) de la surface d'évitement (5) sélectionnée de l'au moins un autre véhicule (15) au moyen d'un réseau de télécommunications.

2. Procédé selon la revendication 1, dans lequel l'étape de définition de la zone à risque (3) est en outre basée sur la pluralité de surfaces d'évitement (5) candidates du véhicule initiateur (11), dans lequel la zone à risque (3) comprend la situation anormale (2) déterminée et la pluralité de surfaces d'évitement (5) candidates du véhicule initiateur (11).

3. Procédé selon la revendication 1, dans lequel l'étape de détermination d'au moins un véhicule (15) impliqué dans la situation anormale (2) comprend la détermination d'au moins l'un du reste des véhicules autonomes (12) affectés par la zone à risque (3) déterminée du véhicule initiateur (11) sur la base d'un trajet de référence (4) de chacun du reste de véhicules autonomes (12) et de la zone à risque (3) déterminée.

4. Procédé selon la revendication 1, dans lequel le coefficient de risque est basé sur une énergie cinétique du véhicule impliqué et sur un nombre de personnes à bord du véhicule impliqué.

5. Procédé selon la revendication 1, dans lequel l'étape de génération d'une pluralité de surfaces d'évitement (5) candidates de l'au moins un autre véhicule (15) est réalisée au moyen d'une unité de commande (103) de l'au moins un autre véhicule (15), dans lequel le procédé comprend une étape de transmission de la pluralité générée de surfaces d'évitement (5) candidates par l'au moins un autre véhicule (15) au véhicule principal (19) au moyen d'un réseau de télécommunications.

6. Procédé selon l'une quelconque des revendications 1 à 5, comprenant une étape de transmission d'un trajet de référence (4) de l'au moins un autre véhicule (15) et d'au moins un paramètre de l'au moins un autre véhicule (15) au véhicule principal (19) au moyen d'un réseau de télécommunications, dans lequel l'étape de génération d'une pluralité de surfaces d'évitement (5) candidates de l'au moins un autre véhicule (15) est réalisée au moyen d'une unité de commande (103) du véhicule principal (19) sur la base du trajet de référence (4) reçu de l'au moins un autre véhicule (15) et de l'au moins un paramètre reçu de l'au moins un autre véhicule (15).

7. Procédé selon la revendication 1, dans lequel l'étape de génération d'une pluralité de surfaces d'évitement (5) candidates du véhicule principal (19) comprend la génération d'au moins une surface d'évitement (5) candidate sans collision du véhicule principal (19) et la génération d'au moins une surface d'évitement (5) candidate avec collision du véhicule principal (19).

8. Procédé selon la revendication 1, dans lequel l'étape de génération d'une pluralité de surfaces d'évitement (5) candidates de l'au moins un autre véhicule (15) comprend la génération d'au moins une surface d'évitement (5) candidate sans collision de l'au moins un autre véhicule (15) et la génération d'au moins une surface d'évitement (5) candidate avec collision de l'au moins un autre véhicule (15).

9. Procédé selon l'une quelconque des revendications 7 ou 8, dans lequel l'étape de sélection d'une surface d'évitement (5) du véhicule principal (19) et de sélection d'une surface d'évitement (5) de l'au moins un autre véhicule (15) comprend les étapes de :
- génération d'une pluralité de scénarios candidats, dans lequel chaque scénario comprend une surface d'évitement (5) candidate du véhicule principal (19) et une surface d'évitement (5) candidate de l'au moins un autre véhicule (15),
- prédiction d'une ampleur de collision de chacun de la pluralité de scénarios candidats sur la base du coefficient de risque calculé de l'au moins un autre véhicule (15),
- sélection d'un parmi la pluralité de scénarios candidats, dans lequel le scénario sélectionné comprend une ampleur de collision inférieure.

10. Procédé selon la revendication 9, dans lequel le scénario sélectionné comprend la sélection d'une surface d'évitement (5) candidate sans collision du véhicule principal (19).

11. Système de commande d'une pluralité de véhicules autonomes, dans lequel :
a) un dispositif de détection d'anomalie (101) d'un véhicule initiateur (11) est configuré pour déterminer une situation anormale (2) qui génère un changement dans un trajet de référence (4) du véhicule initiateur (11),
b) une unité de commande (103) du véhicule initiateur (11) est configurée pour définir une zone à risque (3) et transmettre la zone à risque (3) calculée du véhicule initiateur (11) à un reste des véhicules autonomes (1) dans un environnement proche,
c) chaque dispositif de détection d'anomalie (101) de chacun du reste des véhicules autonomes (1), est configuré pour déterminer sur la base de la zone à risque (3) si le reste des véhicules autonomes (12) sont des véhicules (15) impliqués dans la situation anormale (2),
d) un dispositif de quantification de risque (102) du véhicule initiateur (11) est configuré pour calculer un coefficient de risque et un dispositif de quantification de risque (102) de chaque véhicule (15) impliqué est configuré pour calculer une quantification de risque, **caractérisé en ce que**
e) le véhicule initiateur (11) est configuré pour transmettre, en réponse à un message demandant le coefficient de risque envoyé par le véhicule initiateur (11), les coefficients de risque calculés de l'au moins un véhicule (15) impliqué au véhicule initiateur (11) au moyen d'un réseau de télécommunications,
f) l'unité de commande (103) du véhicule initiateur (11), sur la base des coefficients de risque reçus, est configurée pour désigner un véhicule principal (19) qui centralise la sélection d'une surface d'évitement (5), dans lequel le véhicule principal (19) est le véhicule autonome (1) avec le coefficient de risque le plus élevé,
g) l'unité de commande (103) du véhicule principal (19) est configurée pour générer une pluralité de surfaces d'évitement (5) candidates sur la base de la situation anormale (2) déterminée et du trajet de référence (4) du véhicule principal (19),
h) l'unité de commande (103) du véhicule principal (19) est configurée pour générer une pluralité de surfaces d'évitement (5) candidates de l'au moins un autre véhicule (15) sur la base de la situation anormale (2) déterminée et d'un trajet de référence (4) de l'au moins un autre véhicule (15), l'au moins un autre véhicule (15) étant l'au moins un véhicule (15) impliqué et/ou le véhicule initiateur (11),
i) l'unité de commande (103) du véhicule principal (19) est configurée pour sélectionner une surface d'évitement (5) du véhicule principal (19) parmi la pluralité générée de surfaces d'évitement (5) candidates du véhicule principal (19), et sélectionner une surface d'évitement (5) de l'au moins un autre véhicule (15) parmi la pluralité générée de surfaces d'évitement (5) candidates de l'au moins un autre véhicule (15) sur la base du coefficient de risque calculé de l'au moins un autre véhicule (15), et
j) un émetteur-récepteur d'ondes électromagnétiques (105) du véhicule principal (19) est configuré pour transmettre à l'au moins un autre véhicule (15) la surface d'évitement (5) sélectionnée de l'au moins un autre véhicule (15) au moyen d'un réseau de télécommunications.

12. Véhicule autonome (1) comprenant le système de commande d'une pluralité de véhicules autonomes selon la revendication 11.
